# EUROPEAN PATENT APPLICATION

(11) **EP 2 599 675 A2**
(43) Date of publication of application: **05.06.2013**
(21) Application number: 12193346.9
(22) Date of filing: 20.11.2012
(51) Int. Cl.: B60S 1/52, B60S 1/38

(54) **Wiper device for cleaning a vehicle windscreen**

(30) Priority: 02.12.2011 DE 102011055962
(71) Applicant: Valeo Systèmes d'Essuyage, 78321 Le Mesnil Saint Denis (FR)
(72) Inventor: Egner-Walter, Bruno, 74076 Heilbronn (DE); Schaeuble, Michael, 71665 VAIHINGEN/ENZ (DE)
(74) Representative: Callu Danseux, Violaine

(57) **Abstract**

The invention relates to a wiper device (10) for cleaning a vehicle windscreen, with a wiper blade (15), which is fastened exchangeably on a wiper arm (11), wherein along the wiper blade (15) an elongatedly constructed spray device (40) having several nozzle openings (50) is arranged for applying a washing fluid to the vehicle windscreen, which is constructed as a separate component from the wiper blade (15). It is provided according to the invention that the wiper arm (11) has a hood-shaped cover (20) for the wiper blade (15), which covers the wiper blade (15) over its entire length, and that the spray device (40) is arranged in the area of the cover (20).

## Description

### State of the art

The invention relates to a wiper device for cleaning a vehicle windscreen according to the preamble of Claim 1.

A wiper device of this kind is disclosed by the applicant in EP1 918 167 A1. The known wiper device exhibits a spray device constructed in the form of a hose, which extends spaced parallel to the wiper blade by means of fastening clips which are arranged on the wiper blade of the wiper device. Bores may be made in the hose, which form spray openings for the application of a washing fluid to the vehicle windscreen. The disadvantage of the wiper device known from the aforementioned specification is that when a wiper blade is replaced, the hose has to be separated from the wiper blade in each case and refitted to the new wiper blade. Moreover, the spray device is not protected from the outside environment, which means that leaves or the like can collect between the wiper blade and the spray device, impeding the wiping function of the wiper blade.

### Disclosure of the invention

Starting from the state of the art, the problem addressed by the invention is that of developing a wiper device for cleaning a vehicle windscreen according to the preamble of Claim 1, such that when a wiper blade is replaced no increased assembly work is required. Moreover, a fitting offering protection wherever possible or a possibly protected arrangement of the spray device in the area of the wiper blade should be facilitated, so that functional impairments, as in the state of the art, can be reliably avoided. This problem is solved according to the invention with a wiper device for cleaning a vehicle windscreen having the characteristics of Claim 1, in that the wiper arm has a hood-shaped cover for the wiper blade, which covers the wiper blade at least substantially over its entire length, and in that the spray device is arranged in the area of the cover.

Advantageous developments of the wiper device according to the invention for cleaning a vehicle windscreen are set out in the dependent claims. All combinations of at least two of the features disclosed in the claims, the description and/or the figures fall within the framework of the invention.

In a particularly preferred embodiment of the invention in design terms, it is provided that the spray device is configured as a separate component to the cover in the area of the cover and is connected to the cover. The functional separation referred to between the wiper blade and the spray device is thereby achieved, in that the spray device is connected to the cover, such that when the wiper blade is replaced the spray device can remain on the cover.

A particularly simply configured spray device is made possible when the spray device comprises at least one washing fluid hose, in which the nozzle openings are constructed as bores. Consequently, no separate components forming the nozzle openings are required; instead, the washing fluid hose providing the washing fluid supply directly forms the nozzle openings.

In order to prevent washing fluid from escaping from the open end of the washing fluid hose in the area of the wiper blade, it is furthermore proposed in a particularly preferred embodiment that the open end of the washing fluid hose is closed by means of a plug-like holder in the cover. This holder may simultaneously serve to position or fix the washing fluid hose within the cover, so that the holder performs a dual function.

In an alternative embodiment for using a washing fluid hose it is possible, however, for the spray device to be configured integrally within the cover and to exhibit a washing fluid duct from which the nozzle openings originate. A washing fluid duct of this kind may be achieved when producing the cover, in that said cover is configured as an injection moulded part or as an extruded part, so that the washing fluid duct is formed when the cover is produced by means of a correspondingly designed mould, which means that separate subsequent production stages can be avoided.

A particularly good spray device function is achieved when the nozzle openings of the spray device are arranged along both longitudinal sides of the wiper blade. In this case, independently of the direction of movement of the wiper blade, washing fluid is applied to the vehicle windscreen right in front of the wiper blade or a wiper lip in each case.

To enable the wiper blade to be replaced on the wiper arm without difficulty, it is proposed, moreover, that the cover has a part connected to a wiper arm joint, on which a pivotable part is arranged, that the rotation axis of the pivotable part is arranged in the region of the fastening of the wiper blade on the part which is connected to the wiper arm joint, and that the pivotable part is connected to the wiper blade, preferably via a detent connection. A cover design of this kind enables the pivotable part of the cover to be pivoted away in order replace the wiper blade, so that the fastening area of the wiper blade is accessible. The functionality or operating safety of the spray device may be further improved at low outside temperatures if the spray device is constructed so as to be heatable by means of a heating device having a heating wire.

The wiper device according to the invention has the advantage that it can work with wiper blades of any construction or design, so that wiper blades which can be produced relatively simply and therefore inexpensively from a constructional point of view can be used. Nevertheless, due to the use of the spray device and the optional use of the heating device, the wiper device has a high functional range, which ensures optimal functioning of the wiper device even under relatively difficult environmental conditions. It is preferably provided that the wiper device is arranged in the area of a rear windscreen wiper, as in this case the cover is able to perform the additional protective function for the wiper blade or the spray device. Moreover, wiper devices for front windscreens usually have covers, particularly in the form of the engine bonnet, which restrict the possible installation space for a cover (on the wiper blade) or guarantee adequate protection of the spray device against outside atmospheric influences when the wiper blades are in the stationary position.

Further features, advantages and details of the invention are obtained from the following description of preferred exemplary embodiments and also with the help of the drawing.

In the drawing:
- Fig. 1: shows a simplified side view of a wiper device according to the invention for cleaning a vehicle windscreen, in which part of a cover is depicted in different positions,
- Fig. 2: shows a longitudinal section through the wiper device according to Fig. 1 in the area of the wiper blade,
- Fig. 3: shows a sectional top view of the wiper device according to Fig. 2,
- Fig. 4: shows a section on the plane IV-IV in Fig. 3,
- Fig. 5: shows a section on the plane V-V in Fig. 3 and
- Fig. 6 and 7: show various representations for fastening a spray device in the area of a cover in cross-section.

The same components or components with the same function are denoted using the same reference numbers in the figures.

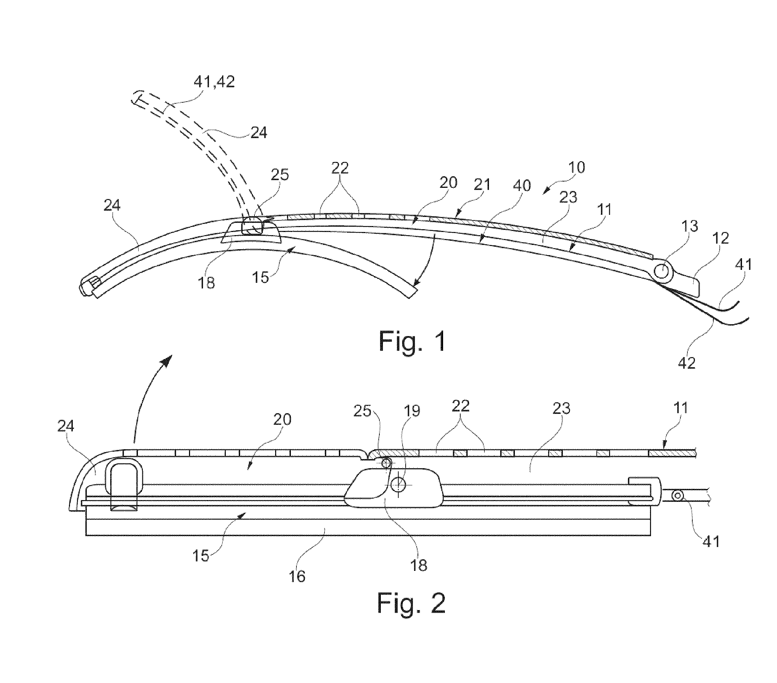

A wiper device 10 for cleaning a vehicle windscreen (not shown) is depicted in Fig. 1. The wiper device 10 is preferably used on rear vehicle windscreens, although it is also suitable in principle for the area of application of front windscreens.

The wiper device 10 exhibits a wiper arm 11, which is pivot-mounted on a wiper arm joint 12 in an axis 13. A wiper blade 15 is fastened exchangeably on a wiper arm 11, which exhibits a wiper lip 16 on the side facing the vehicle windscreen (Fig. 2). The wiper blade 15 is fastened to the wiper arm 11 by means of a wiper blade adapter 18, wherein for the configuration or the nature of the fastening of the wiper blade 15 to the wiper arm 11, a plurality of different constructions or arrangements can be used, as are already known per se from the state of the art, because they are not essential to the invention. All that is important for the function of the wiper blade 15 is that it is pivotably mounted on the wiper arm 11 in a rotation axis 19, so that it is particularly able to adjust to the contour of the vehicle windscreen during movement of the wiper blade 15 over the vehicle windscreen.

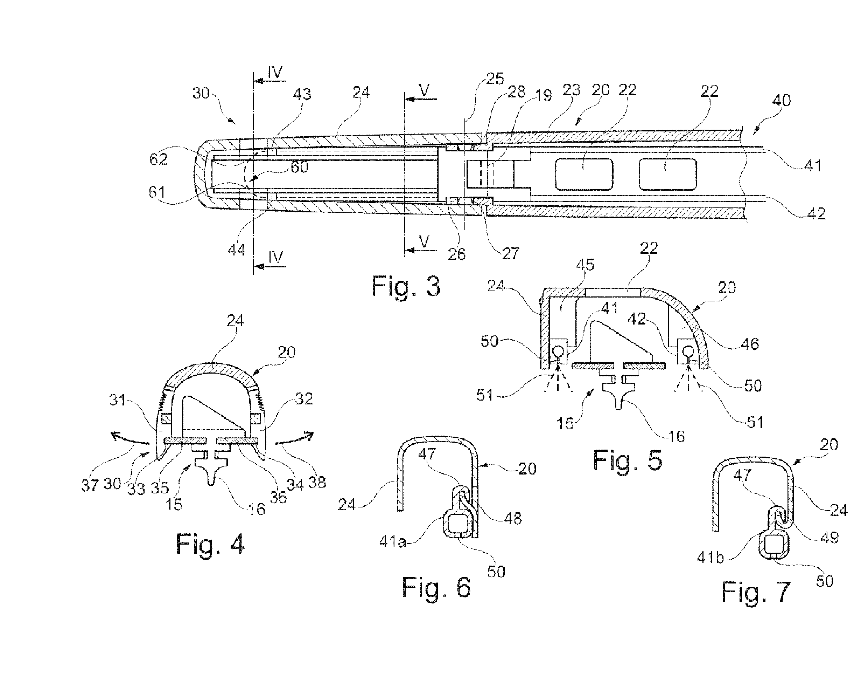

The wiper arm 11 forms a cover 20 which contains the wiper blade 15 over its entire length on the side facing away from the vehicle windscreen, at least in the area of the wiper blade 15. As is particularly evident from Fig. 4 and Fig. 5, the cover 20 has a substantially U-shaped cross-section, at least in the area of the wiper blade 15. Along the upper side 21 of the cover 20, recesses or openings 22 may be provided. The cover 20 exhibits a first part 23 on the side of the wiper arm joint 12, to which a second part 24 is attached on the side facing away from the wiper arm joint 12. The second part 24 is pivot-mounted to the first part 23 on an axis 25, wherein the pivoted position of the second part 24, which is assumed when a wiper blade 15 on the wiper arm 11 is to be replaced, is depicted by means of a dotted line in Fig. 1. The arrangement of the axis 25 is such that the wiper blade 15 is accessible to a user in the area of the wiper blade adapter 18 when the second part 24 is pivoted, so that said user can replace the wiper blade 15 on the wiper arm 11 without difficulty.

In the exemplary embodiment shown, the cover 20 is an integral part of the wiper arm 11, such that at least the first part 23 is formed by the wiper arm 11. In this case, the first part 23 of the wiper arm 11 is configured as a press-bent part. The second part 24 of the wiper arm 11 or the cover 20 may likewise be made of metal, as with the wiper arm 11 or the first part 23. It is also possible, however, for the second part 24 to be made of plastic. Furthermore, it is conceivable in principle for the cover 20 also to be configured as a separate part from the wiper arm 11.

As is most clearly evident from Fig. 3, the first part 23 exhibits openings 27 formed in link-type extensions 26 for the pivotable arrangement of the second part 24, with which pin-like extensions 28 of the second part 24 engage. In order to securely connect the second part 24 to the wiper blade 15 with the second part 24 in the operating position, so as to prevent the second part 24 from automatically moving into the position which enables the wiper blade 15 to be replaced, a catch connection 30 is configured between the second part 24 and the wiper blade 15.

As can be seen from Fig. 3 and Fig. 4 taken together, the catch connection 30 comprises catch tongues 31, 32 arranged on both longitudinal sides of the wiper blade 15 or else of the cover 20, formed integrally with the cover 20, each of which exhibits a receptacle 33, 34 being U-shaped in cross-section, said receptacles interacting with areas of spring strips 35, 36 projecting laterally from the wiper blade 15 to configure the catch connection 30. To release the catch connection 30, the catch tongues 31, 32 need simply to be pivoted in the direction of the arrows 37, 38.

It is provided according to the invention that the wiper device 10 exhibits a spray device 40 for applying washing fluid to the vehicle windscreen. The spray device 40 comprises at least one, but in the exemplary embodiment depicted in the figures, two washing fluid hoses 41, 42. The two washing fluid hoses 41, 42 are conducted within the wiper arm 11 or the cover 20 and connected on the vehicle side to a storage container for the washing fluid. The end sections of the two washing fluid hoses 41, 42 facing the wiper blade 15 engage with two plug-like extensions 43, 44 shown in Fig. 3, which tightly close the washing fluid hoses 41, 42 hydraulically. The two washing fluid hoses 41, 42 are arranged along the two longitudinal sides of the wiper blade 15 or else fastened in the cover 20, wherein the configuration of the washing liquid hoses 41, 42 is preferably in the area of the underside of the cover 20 facing the vehicle windscreen, as is represented by means of Fig. 5 to Fig. 7. It is moreover evident from Fig. 5 that the two washing fluid hoses 41, 42 are conducted by means of transverse ribs 45, 46 in the cover 20 in the area of the cover 20.

In Fig. 6 and Fig. 7, by contrast, a fastening of a washing fluid hose 41a or 41b is depicted, in which the washing fluid hose 41a, 41b exhibits a hook-shaped extension 47 on its upper side facing away from the vehicle windscreen, which may either be fitted on a carrier 48 which is formed by a blank in the cover 20 according to Fig. 6, or on an inwardly curved holding portion 49 of the cover 20 according to Fig. 7.

The washing fluid hoses 41, 42 and 41a, 41b exhibit nozzle openings 50 on the side facing the vehicle windscreen, which, as is only evident from Fig. 5, each form a washing fluid jet 51 when the spray device 40 is operated. It is essential for the nozzle openings 50 only to be formed in the area of the cover 20 or of the wiper blade 15 in which the wiper blade 15 is situated. The use of a washing fluid hose 41, 42 and 41a, 41b has the advantage that when the second part 24 of the cover 20 is pivoted into the position shown by a dotted line in Fig. 1, the washing fluid hose concerned 41, 42 or 41a, 41b can be pivoted without additional measures.

As a variation to the exemplary embodiments of the spray device 40 shown in the figures, it is also conceivable for the nozzle openings 50 to be configured as an integral component of the cover 20, in that the cover 20 exhibits corresponding washing fluid ducts on the underside facing the vehicle windscreen and the nozzle openings 50 are configured as bores in the cover 20, which open into the washing fluid ducts. In this case, however, additional provisions must be made in order to achieve pivotability between the two parts 23, 24, i.e. in the dividing point between the two parts 23, 24 in the area of the washing fluid ducts, corresponding sealing measures are taken.

In addition, it may be provided that alongside the spray device 40 a heating device 60 is also provided, which serves to safeguard the functioning of the spray device 40 at low temperatures. For this purpose, the heating device 60, as can only be seen from Fig. 3, comprises at least one heating wire 61, 62, which is arranged within the cross-section of the washing fluid hose 41, 42 or 41a, 41b, as is shown in greatly simplified form in Fig. 3. The heating wires 61, 62 are electrically coupled to a voltage supply.

The wiper device 10 described thus far may be changed or modified in multifarious ways without deviating from the basic idea underlying the invention. This idea is that a spray device 40 is provided in the area of a cover 20 for the wiper blade 15, wherein the wiper blade 15 may be of any design and requires no additional measures in relation to the spray device 40. As a variation to the invention, it is also conceivable that the cover and therefore also the spray device 40 does not extend over the entire length of the wiper blade 15. However, the cover 20 or the spray device 40 should extend at least substantially, i.e. at least by roughly 80%, over the length of the wiper blade 15.

### Reference number list

- 10: Wiper device
- 11: Wiper arm
- 12: Wiper arm joint
- 13: Axis
- 15: Wiper blade
- 16: Wiper lip
- 18: Wiper blade adapter
- 19: Rotation axis
- 20: Cover
- 21: Upper side
- 22: Opening
- 23: First part
- 24: Second part
- 25: Axis
- 26: Link-like extension
- 27: Opening
- 28: Pin-like extension
- 30: Catch connection
- 31: Catch tongue
- 32: Catch tongue
- 33: U-shaped receptacle
- 34: U-shaped receptacle
- 35: Spring strip
- 36: Spring strip
- 37: Arrow
- 38: Arrow
- 40: Spray device
- 41: Washing fluid hose
- 41a: Washing fluid hose
- 41b: Washing fluid hose
- 42: Washing fluid hose
- 43: Plug-like extension
- 44: Plug-like extension
- 45: Transverse rib
- 46: Transverse rib
- 47: Hook-shaped extension
- 48: Carrier
- 49: Holding segment
- 50: Nozzle opening
- 51: Washing fluid jet
- 60: Heating device
- 61: Heating wire
- 62: Heating wire

## Claims

1. A wiper device (10) for cleaning a vehicle window, with a wiper blade (15), which is fastened exchangeably on a wiper arm (11), wherein along the wiper blade (15) an elongatedly constructed spray device (40) having several nozzle openings (50) is arranged for applying a washing fluid onto the vehicle window, which is constructed as a separate component from the wiper blade (15),
**characterized in that**
the wiper arm (11) has a hood-shaped cover (20) for the wiper blade (15), which covers the wiper blade (15) at least substantially over its entire length, and that the spray device (40) is arranged in the region of the cover (20).

2. The wiper device according to Claim 1,
**characterized in that**
in the region of the cover (20) the spray device (40) is constructed as a separate component from the cover (20) and is connected with the cover (20).

3. The wiper device according to Claim 2,
**characterized in that**
the spray device (40) comprises at least one washing fluid hose (41, 41a, 41b, 42) in which the nozzle openings (50) are constructed as bores.

4. The wiper device according to Claim 3,
**characterized in that**
the open end of the washing fluid hose (41, 42) is closed by means of a plug-like holder (43, 44) in the cover (20).

5. The wiper device according to Claim 1,
**characterized in that**
the spray device (40) is constructed in one piece in the cover and has a washing fluid duct from which the nozzle openings originate.

6. The wiper device according to one of Claims 1 to 5,
**characterized in that**
the nozzle openings (50) of the spray device (40) are arranged along both longitudinal sides of the wiper blade (15).

7. The wiper device according to one of Claims 1 to 6,
**characterized in that**
the spray device (40) is arranged on the inner side of the cover (20) on the lower region facing the vehicle window.

8. The wiper device according to one of Claims 1 to 7,
**characterized in that**
the cover (20) has a part (23) connected with a wiper arm joint (12) and on which a pivotable part (24) is arranged, that the rotation axis (25) of the pivotable part (24) is arranged in the region of the fastening of the wiper blade (15) on the part (23) which is connected with the wiper arm joint (12), and that the pivotable part (24) is connected with the wiper blade (15) preferably via a detent connection (30).

9. The wiper device according to Claim 8,
**characterized in that**
the detent connection (30) embraces spring strips (35, 36) of the wiper blade (15) by means of detent tongues (31, 32).

10. The wiper device according to one of Claims 1 to 9,
**characterized in that**
the spray device (40) is constructed so as to be heatable by means of a heating device (60) having a heating wire (61, 62).
